# EUROPÄISCHE PATENTSCHRIFT

(11) **EP 3 595 933 B1**
(45) Veröffentlichungstag und Bekanntmachung des Hinweises auf die Patenterteilung: **08.09.2021**
(21) Anmeldenummer: 18725140.0
(22) Anmeldetag: 07.05.2018
(51) Int. Cl.: B60R 11/04, B60R 11/00, B60Q 1/00

(54) **BEWEGBARE BELEUCHTUNGS- UND BILDAUFNAHME-EINHEIT FÜR EIN KRAFTFAHRZEUG**
MOVABLE LIGHTING AND IMAGE-RECORDING UNIT FOR A MOTOR VEHICLE
UNITÉ D'ÉCLAIRAGE ET D'ENREGISTREMENT D'IMAGES POUVANT ÊTRE DÉPLACÉE POUR UN VÉHICULE AUTOMOBILE

(30) Priorität: 08.05.2017 DE 102017109872; 27.07.2017 DE 102017117024
(43) Veröffentlichungstag der Anmeldung: 22.01.2020
(73) Patentinhaber: SMR Patents S.à.r.l., 2453 Luxembourg (LU)
(72) Erfinder: HERRMANN, Andreas, 71364 Winnenden-Baach (DE); GÖTTLICHER, Stefanie, 70499 Stuttgart (DE); LIESENER, Alf, 73630 Remshalden (DE)
(74) Vertreter: Weber-Bruls, Dorothée
(86) Internationale Anmeldenummer: PCT/EP2018/061680
(87) Internationale Veröffentlichungsnummer: WO 2018/206484

(56) Entgegenhaltungen:
- DE-A1-102008 012 033
- DE-A1-102014 013 673
- DE-A1-102014 217 864
- DE-A1-102015 007 179
- DE-A1-102015 113 725
- DE-A1-102016 200 183
- DE-U1- 20 319 579
- DATABASE INSPEC [Online] THE INSTITUTION OF ELECTRICAL ENGINEERS, STEVENAGE, GB; April 1968 (1968-04), ALLEMANDOU P: "Examples of calculations and layout of non-reciprocal four-terminal networks with constant input impedance", Database accession no. 2014
- DATABASE INSPEC [Online] THE INSTITUTION OF ELECTRICAL ENGINEERS, STEVENAGE, GB; 1965, MOZER J ET AL: "Moire patterns of the Cornu's gratings", Database accession no. 217
- DATABASE INSPEC [Online] THE INSTITUTION OF ELECTRICAL ENGINEERS, STEVENAGE, GB; 1968, KULIKOVSKII A G: "Stability of flows of a weakly compressible fluid in a plane pipe of large, but finite length", Database accession no. 864

## Beschreibung

Die Erfindung betrifft eine bewegbare Beleuchtungs- und Bildaufnahme-Einheit für ein Kraftfahrzeug, nach dem Oberbegriff von Anspruch 1 ist.

In modernen Kraftfahrzeugen sollen Außenrückblickspiegel zunehmend durch Kameraanordnungen ergänzt oder vollständig ersetzt werden. Wie von Außenrückblickspiegeln bekannt, ist es wünschenswert, solche Kameraanordnungen bei Nichtgebrauch, beispielsweise beim Parken eines Fahrzeugs, in eine Ruheposition zu bewegen, um insbesondere Beschädigungen zu vermeiden. Da eine reine Kameraanordnung, die auch als Kamerapod bezeichnet wird, in der Regel kompakter als ein Außenrückblickspiegel ausgestaltet werden kann, ist es dabei bevorzugt, wenn die Kameraanordnung in der Ruheposition vollständig innerhalb der Kraftfahrzeugverkleidung verstaut wird, also die Ruheposition eine Verstauposition darstellt.

Eine Rückblickvorrichtung für ein Kraftfahrzeug liefert ein mindestens den gesetzlichen Vorschriften entsprechendes Bild des hinteren Bereiches des Kraftfahrzeugs und gehört zu einer Untergruppe von Vorrichtungen für eine indirekte Sicht. Diese liefern Bilder und Ansichten von Objekten, die sich nicht im direkten Sichtfeld eines Fahrers befinden, das heißt in Richtungen entgegengesetzt, links, rechts, unterhalb und/oder oberhalb der Blickrichtung des Fahrers. Der Blick des Fahrers kann insbesondere auch in Blickrichtung nicht vollständig zufriedenstellend sein, zum Beispiel können sich Sichtbehinderungen durch Fahrzeugteile des eigenen Fahrzeuges, wie zum Beispiel durch Teile der Karosserie, insbesondere der A-Säule, der Dachkonstruktion und/oder der Motorhaube, und Sichtbehinderungen durch andere Fahrzeuge und/oder Gegenstände außerhalb des Fahrzeugs ergeben, die die Sicht derart behindern können, dass der Fahrer eine Fahrsituation nicht vollständig zufriedenstellend bzw. nur unvollständig erfassen kann. Außerdem ist es möglich, dass der Fahrer nicht in der Lage ist, die sich ihm in oder abseits der Blickrichtung präsente Situation so zu erfassen, wie es nötig wäre, um das Fahrzeug der Situation entsprechend zu kontrollieren. Daher kann eine Rückblickvorrichtung auch derart ausgestaltet sein, dass sie die Informationen entsprechend den Fähigkeiten des Fahrers aufbereitet, um ihm eine bestmögliche Erfassung der Situation zu ermöglichen.

Verschiedene Funktionen und Geräte können in Rückblickvorrichtungen eingebaut und/oder mit Hilfe von Rückblickvorrichtungen gesteuert werden, wobei insbesondere auch Kameras umfasst sind. Besonders nützlich sind Funktionen und Geräte zur Verbesserung, Erweiterung und/oder Aufrechterhaltung der Funktionalität der Rückblickvorrichtung bei normalen oder extremen Bedingungen. Hierbei können Heiz- und/oder Kühleinrichtungen, Reinigungsmittel wie Wischer, flüssige und/oder gasförmige Sprays, Aktuatormittel zum Bewegen der Rückblickvorrichtung oder Teile davon, wie beispielsweise eine Anzeige, ein Kamerasystem und/oder Teile von einem Kamerasystem, umfassend beispielsweise Linsen, Filter, Lichtquellen, adaptive Optiken wie zum Beispiel verformbare Spiegel, Sensoren und/oder Spiegel, und /oder Aktuatormittel zur Induktion von Bewegungen von anderen Objekten, beispielsweise Teile des Fahrzeugs und/oder Gegenstände, die das Fahrzeug umgeben, umfasst sein.

Weiterhin kann die Rückblickvorrichtung lineare Führungen und/oder rotierende Räder, wie beispielsweise ein Filterrad, zum Austauschen optischer Elemente, beispielsweise umfassend Linsen, Spiegel, Lichtquellen, Sensoren, adaptive Optiken wie verformbaren Spiegeln und/oder Filter, umfassen.

In Rückblickvorrichtungen können weitere Einrichtungen integriert sein, und/oder es können weitere Einrichtungen mit Hilfe von Rückblickvorrichtungen gesteuert werden, wie zum Beispiel jede Art von Lichtmodul, umfassend ein externes Lichtmodul, ein internes Lichtmodul, ein Frontlicht, ein Rücklicht, ein Nebelscheinwerfer, ein Bremslicht, ein Beschleunigungslicht, ein Blinklicht, ein Logolicht, eine Vorfeldbeleuchtung, ein Bodenlicht, ein Pfützenlicht, ein Blitzlicht, ein Navigationslicht, ein Positionslicht, ein Notlicht, ein Scheinwerfer, ein grünes Licht, ein rotes Licht, ein Warnlicht, ein Blinklicht-Lichtmodul, ein Annäherungslicht, ein Suchlicht, ein Informationslicht, eine Anzeige und/oder dergleichen. Weitere Beispiele für Funktionen und Vorrichtungen, die in Rückblickvorrichtungen integriert und/oder mit Hilfe von Rückblickvorrichtungen gesteuert werden, können beispielsweise ein Müdigkeits-Erkennungssystem, ein Sekundenschlaf-Erkennungssystem, ein Abstands- und/oder Geschwindigkeitsbestimmungssystem, beispielsweise ein LIDAR (Lichtdetektion und Abstandserfassung) System, ein Toter-Winkel-Indikationssystem, ein Spurwechsel-Assistenzsystem, ein Navigationsassistenzsystem, ein Tracking-Assistent-System, ein Mensch-Maschine-Interaktionssystem, ein Maschinen-Maschinen-Interaktionssystem, ein Not- und Vorsichtsmaßnahmen-Assistenzsystem, wie ein Unfallvermeidungs-Assistenzsystem, ein Gegenmaßnahmen-Assistenzsystem, ein Bremsassistenzsystem, ein Lenkassistenzsystem, ein Beschleunigungsassistenzsystem, ein Fluchtassistenzsystem, das beispielsweise ein Schleudersitzsystem umfasst, ein Richtungsanzeiger, ein Toter-Winkel-Indikator, ein Annäherungssystem, ein Notbremssystem, eine Ladestatusanzeige, ein Fahrzeugmodus System, das beispielsweise ein Sport-Modus System, ein Economy-Modus System, ein Autonomes-Fahr-Modus System, ein Schlaf-Modus System und/oder ein Anti-Diebstahl-System umfasst, ein Fahrzeug-Verschlossen Indikationssystem, eine Fahrzeug-Gestohlen Anzeige, ein Warnsignal-System, ein Temperatur-Indikator-System, eine Wetterindikationssystem, ein Ampel-Signalsystem, ein Kraftstoff-Statussystem und/oder beliebige Kombination davon umfassen.

Beleuchtungseinrichtungen für Rückblickvorrichtungen und/oder Lichtleiter dazu sind in der deutschen Patentanmeldung Nr. 102012108488, in der deutschen Patentanmeldung Nr. 102012104529, in der deutschen Patentanmeldung Nr. 102012107833, in der deutschen Patentanmeldung Nr. 102012107834, in dem europäischen Patent Nr. 2738043, in dem europäischen Patent Nr. 2947378, in der internationalen Patentanmeldung Nr. 2015/173695, in der europäischen Patentanmeldung Nr. 3045944, in der US-Patentanmeldung Nr. 15 / 228,566, in der US-Patentanmeldung Nr. 15 / 000,733, in der internationalen Patentanmeldung Nr. 2016/147154, in der US-Patentanmeldung Nr. 15 / 256,532, in der deutschen Patentanmeldung Nr. 102015115555, in der europäischen Patentanmeldung Nr. 3144183, der Anmelderin beschrieben.

Ein Kameramodul kann insbesondere eine Vielzahl von verschiedenen optischen Elementen, die unter anderem eine Vielzahl von verschiedenen Sensoren und Lichtquellen umfasst, sowie Gehäuseteilen aufweisen. Das Gehäuse eines Kameramoduls kann aus Kunststoff, Metall, Glas, einem anderen geeigneten Material und/oder aus einer beliebigen Kombination davon hergestellt sein und kann in Kombination mit den unten beschriebenen Techniken zum Ändern oder Modifizieren der Eigenschaften des Materials oder der Materialoberfläche verwendet werden. Gehäuse sind beispielsweise in der deutschen Patentanmeldung Nr. 102016108247.3 offenbart.

Die Kamera kann beispielsweise CCD- oder CMOS- oder Lichtfeldsensoren umfassen, wie sie beispielsweise in der deutschen Patentanmeldung Nr. 102011053999 und dem US-Patent Nr. 6,703,925 beschrieben sind. Auch kann ein Bereich des Sensors für verschiedene Zwecke reserviert werden, um beispielsweise einen Teststrahl zu detektieren, wie in dem US-Patent Nr. 8,031,224 offenbart.

Die optischen Elemente können aus irgendeiner Art von Glas oder irgendeinem anderen geeigneten Material geformt oder gestaltet sein. Glas wird hier im Sinne eines nichtkristallinen amorphen Festkörpers verwendet, der einen Glasübergang zeigt, wenn er in Richtung des flüssigen Zustandes erhitzt wird. Es umfasst beispielsweise die Gruppe der Polymergläser, Metallgläser, Siliciumdioxid-Gläser, aber auch jedes andere geeignete Material, das den Glasübergang zeigt, kann ebenfalls verwendet werden. Das Glas kann entweder flach, keilförmig, rechteckig, zylindrisch, sphärisch, konisch, elliptisch und/oder kreisförmig sein, wie es beispielsweise in der deutschen Patentanmeldung Nr. 102016108247.3 und der deutschen Patentanmeldung Nr. 102011103200 beschrieben ist, oder eine Form nach den unterschiedlichen Bedürfnissen oder Linsen-Typen haben. Als nicht einschränkende Beispiele können Kameramodule mit Linsen ausgerüstet werden, wie beispielsweise eine Weitwinkel- oder Fischaugenlinse, die geeignet ist, Peripheriebilder bereitzustellen, wie in der US-Patentanmeldung Nr. 15 / 281,780 und der US-Patentanmeldung Nr. 13 / 090,127 beschrieben, eine Fresnel-Linse oder Mikrolinsen, wie in der deutschen Patentanmeldung Nr. 102011053999 beschrieben, oder eine TIR (Total interne Reflexionslinse), wie in dem US-Patent Nr. 8,740,427 beschrieben. Eine andere Art von optischen Elementen, die bekanntermaßen in Kameramodulen verwendet werden, sind optische Fasern, insbesondere in Form von Faserbündeln und vorzugsweise in Form von Faserbündeln mit einem optischen Kopf, wie beispielsweise in der US-Patentanmeldung Nr. 09 / 771,140 beschrieben. Es können verschiedene Verfahren verwendet werden, um solche optischen Elemente herzustellen, wie beispielsweise das Verfahren, das in dem US-Patent 8,460,060 beschrieben wird. Die optischen Elemente können transparent sein, wie beispielsweise in dem US-Patent Nr. 8,031,224, der deutschen Patentanmeldung Nr. 102016108247.3 und der US-Patentanmeldung Nr. 13 / 242,829 beschrieben. Aber die optischen Elemente können auch semitransparent sein, wie in der US-Patentanmeldung Nr. 09 / 771,140 und der US-Patentanmeldung Nr. 13 / 090,127 beschrieben. Weiterhin können die optischen Elemente vollständig oder teilweise mit unterschiedlichen Arten von Beschichtungen beschichtet werden, um unterschiedliche Effekte zu realisieren, wie beispielsweise Antireflexionsbeschichtungen, siehe das US-Patent Nr. 8,031,224, Reflexionsbeschichtungen auf Chrombasis, siehe das US-Patent Nr. 9,181,616, und andere Beschichtungen, wie beispielsweise für polymerische Substrate in der US-Patentanmeldung Nr. 14 / 936,024 und in US-Patentanmeldung Nr. 15 / 124,310 beschrieben. Vorzugsweise bestehen die optischen Elemente aus einem kratzfesten Material, wie es beispielsweise in der deutschen Patentanmeldung Nr. 102016108247.3 beschrieben ist. Die optischen Elemente können an bestimmten Stellen der optischen Elemente Auskopplungsstrukturen aufweisen, und ein optischer Film, beispielsweise ein Extrusionsfilm, und eine geformte Beschichtung kann, wie in der deutschen Patentanmeldung Nr. 102011103200 beschrieben, aufgebracht werden. Eine Beschichtung zur Spektral- und Spannungskontrolle ist in der US-Patentanmeldung Nr. 15 / 124,310 beschrieben. Verschiedene Filter können in die optischen Elemente integriert werden, wie beispielsweise Graufilter oder Polarisationsfilter, die in der US-Patentanmeldung Nr. 14 / 809,509 beschrieben sind. Elektrochrome Substrate, Polymerelektrolyte und andere ladungsleitende Medien können für die optischen Elemente auf der Grundlage der Beschreibungen umfasst sein, wie in der europäischen Patentanmeldung Nr. 08103179.1, dem Europäisches Patent Nr. 2202826, dem US-Patent Nr. 7,999,992 und dem US Patent Nr. 8,537,451 offenbart.

Das Kameramodul kann auch mit Geräten zur Lichtintensitätsregulierung ausgestattet sein, wie beispielsweise in der US-Patent Anmeldung Nr. 14 / 809,509 beschrieben und Lichtpegelverstärkeröhren, wie in US Patentanmeldung Nr. 09 / 771,140 beschrieben, aufweisen. Die elektrochromen Substrate und Vorrichtungen, die in der europäischen Patentanmeldung Nr. 08103179.1, dem europäischen Patent Nr. 2202826, dem US-Patent Nr. 7,999,992 und dem US-Patent Nr. 8,537,451 verwendet werden, können auch für diesen Zweck verwendet werden, genauso wie ein Transflektor zum Transmittieren oder Reflektieren von Licht auf der Grundlage eines entsprechenden Eingangssignals, wie in der deutschen Patentanmeldung Nr. 102016106126.3 beschrieben.

Das Kameramodul oder eine an das Kameramodul angepasste Abdeckung kann mit verschiedenen Aktuatoren, Antrieben und/oder einer flexiblen Bahn bewegt werden, wie beispielsweise in der deutschen Anmeldung Nr. 102016108247.3 und der US-Patentanmeldung Nr. 15 / 281,780 beschrieben. Weiterhin kann das Kameramodul auch Reinigungselemente umfassen, um das nach außen zeigende und der Umwelt ausgesetzte optische Element zu reinigen. Das Reinigungselement kann beispielsweise Wischer, Bürsten, Lippen, Düsen, Ventilatoren und ähnliche Elemente enthalten, wie sie in der europäischen Patentanmeldung Nr. 14165197.6, der US-Patentanmeldung Nr. 15 / 281,780, der deutschen Patentanmeldung Nr. 102016108247.3, der europäischen Patentanmeldung Nr. 13163677.1, der europäische Patentanmeldung Nr. 15173201.3 und dem europäisches Patent Nr. 1673260 beschrieben sind. Die Reinigungsvorrichtungen sind in ihrer Zusammensetzung nicht beschränkt und können beispielsweise beliebige Gewebe, Elastomere, Schwämme, Bürsten oder Kombinationen davon umfassen. Spezielle Wischerelemente, die Wischerarme, Wischerblätter, Wischtücher, Wischgewebe und Kombinationen davon umfassen, sind in der europäischen Patentanmeldung Nr. 14165197.6 beschrieben. Ein Wischerelement kann beispielsweise nach dem in der europäischen Patentanmeldung Nr. 130164250.6 beschriebenen Verfahren gesteuert werden. Ein Reservoir zum Halten einer Reinigungsflüssigkeit, wie in der europäischen Patentanmeldung Nr. 14165197.6 beschrieben, kann an dem Kameramodul angebracht oder in dieses integriert sein, um die Reinigungsflüssigkeit den optischen Elementen des Kameramoduls zuzuführen.

Verschiedene Verfahren können verwendet werden, um Schmutz oder andere Trübungen zu erkennen, die das Funktionieren des Kameramoduls verhindern oder verschlechtern, wie es im US-Patent Nr. 8,395,514, dem europäischen Patent Nr. 1328141, und dem US-Patent Nr. 8,031,224 beschrieben ist. Auch können Lichtquellen in das Kameramodul eingebaut oder integriert werden, um die Sichtbarkeit von umgebenden Objekten zu erhöhen, Distanzen und Richtungen zu messen und Schmutz zu erkennen, wie in dem US-Patent Nr. 8,031,224, der US-Patentanmeldung Nr. 62 / 470,658 und der US-Patentanmeldung Nr. 09 / 771,140 beschrieben.

Es ist bekannt, Heizvorrichtungen für solche Kameras bzw. Schutzgläser bereitzustellen. Hierzu werden beispielsweise Heizfolien auf das Schutzglas geklebt oder mit diesem laminiert. Eine derartige Lösung ist aufwendig in der Herstellung und besitzt aufgrund der geringen thermischen Masse einer solchen Heizfolie nur eine geringe Heizleistung. Verschiedene Heizmittel wie Heizspulen, in den Linsenhalter oder der Einfassung integrierte Heizvorrichtungen oder andere Heizelemente können verwendet werden, um Kondensation und Vereisung an der Oberfläche von optischen Elementen zu verhindern, wie beispielsweise in der deutschen Patentanmeldung Nr. 102016108247.3 und der US-Patentanmeldung Nr. 62/470,658.

Wasserdichte Abdichtungen gegen Witterungseinflüsse sowie gegen den Einfluss von Waschprozessen mit Waschmitteln, Lösungsmitteln und Hochdruckreinigern können am Gehäuse des Kameramoduls verwendet werden, wie zum Beispiel in der US-Patentanmeldung Nr. 13 / 090,127 beschrieben. Alternativ kann das Gehäuse aus einem Körper hergestellt sein, der aus Kunststoff und leitfähigem Material besteht, wobei das leitfähige Material in dem Kunststoffmaterial verteilt ist, um eine leitfähige Masse zu bilden, um einer Stromquelle, vorzugsweise einer Gleichspannungsquelle, zu ermöglichen, über mindestens zwei Elektroden mit dem Körper eine Verbindung einzugehen und den Körper entsprechend zu erwärmen. Eine leitende Bahn kann in Kunststoffteile des Kameramoduls eingebettet sein, wie in dem europäischen Patent Nr. 1328141 und dem US-Patent Nr. 7,083,311 beschrieben.

Das Kameramodul kann ein Energiesammelsystem umfassen, wie es beispielsweise in der europäischen Patentanmeldung Nr. 09171683.7 beschrieben ist. Ein Fehlererkennungssystem für elektrische Verbraucher, wie es in dem US-Patent Nr. 8,487,633 beschrieben ist, kann verwendet werden, um einen Ausfall des Kameramoduls zu detektieren.

Es können verschiedene Steuerungsmittel und Analysiervorrichtungen verwendet werden, wie beispielsweise die Berechnungseinheiten, die in der US-Patentanmeldung Nr. 13 / 090,127, der deutschen Patentanmeldung Nr. 102016106126.3, der deutschen Patentanmeldung Nr. 102011053999, der europäischen Patentschrift Nr. 2146325 und dem US-Patent Nr. 8,849,104 beschrieben. Zusätzlich kann die HDR-Technologie (Hoher Dynamikumfang) gemäß der US-Patentanmeldung Nr. 14 / 830,40, verwendet werden.

Verschiedene Arten von Befestigungen können verwendet werden, um das Kameramodul an dem Fahrzeug oder anderen Komponenten zu befestigen, wie beispielsweise die Schnappverbindung, die in dem europäische Patent Nr. 2233360 beschrieben.

Aus der US 2016/065 796 A1 ist eine Kameraanordnung für ein Kraftfahrzeug bekannt, bei welcher eine Kamera entlang einer Bewegungsachse linear aus einer Ruheposition in eine Betriebsposition verfahrbar ist. Um unterschiedliche Blickrichtungen der Kamera zu ermöglichen, kann die Kamera zudem um ihre Bewegungsachse gedreht werden.

Die US 2009/231 430 A1 beschreibt eine Kameraanordnung, bei der zum Verfahren der Kamera zwischen einer Ruheposition und einer Betriebsposition eine Gleithülse vorgesehen ist. Die Gleithülse kann eine lineare Bewegung ausführen, während die Kamera schwenkbar an der Gleithülse gelagert ist und senkrecht zur Bewegungsachse der Gleithülse aus einer Fensteröffnung ausschwenkbar ist.

Die DE 10 2014 217 864 A1 betrifft eine Kraftfahrzeugkamera, welche zumindest teilweise in einem Gehäuse gehalten ist, welches an oder in einem Kraftfahrzeug installiert ist. Es ist wenigstens ein Leuchtmittel zur Ausleuchtung zumindest eines Teilbereichs der Kameraumgebung vorhanden. Das Gehäuse soll dabei zumindest teilweise lichtleitend ausgebildet sein, wobei wenigstens ein Leuchtmittel derart positioniert ist, dass damit Licht in den lichtleitenden Teil einkoppelbar und in Richtung des auszuleuchtenden Teilbereichs der Kameraumgebung auskoppelbar ist.

Ein aus der DE 10 2008 012 033 bekanntes Fahrzeug hat eine Kamera zum Überwachen einer Umgebung, d.h. eines hinteren Verkehrsbereichs. Die Kamera ist zwischen einer eingefahrenen Position und einer ausgefahrenen Position bewegbar. Sie ist dabei vollständig mit einer schwenkbaren oberen Klappe und einer schwenkbaren unteren Klappe in der zurückgezogenen Position bedeckt.

Aus der DE 10 2014 013 673 A1 ist eine Halterung für ausklappbare Rückfahrscheinwerfer bekannt.

Die DE 10 2015 007 179 A1 beschreibt eine Umgebungserfassungseinrichtung für einen Kraftwagen.

Bewegbare Kameraeinrichtungen sind ferner aus der DE 10 2011 001 825 A1, DE 10 2006 039 192 A1, DE 10 2015 105 771 A1, DE 10 2009 015 610 A1, US 2015/0183380 A1 und US 2015/0360619 A1 bekannt.

Aus der US 9,403,491 B2 ist ein Fahrzeug mit einer Fahrzeugkarosseriestruktur und einer Videokameraeinheit bekannt. Die Videokameraeinheit umfasst ein Basiselement, eine Videokamera, eine Videoanzeige und einen Bildprozessor. Das Basiselement ist fest an einer Seitenfläche des Fahrzeugs angebracht. Die Videokamera ist beweglich an dem Basisteil zur Bewegung zwischen einer eingefahrenen Position (Ruheposition) benachbart zu der Seitenfläche und einer weg von der Seitenfläche ausgefahrenen Position (Betriebsposition) zur Erfassung eines Videobild angebracht. Die Videoanzeige ist in einem Fahrgastraum angeordnet. Der Bildprozessor ist mit der Videokamera und der Videoanzeige betriebsmäßig gekoppelt, um das von der Videokamera aufgenommene Videobild zu verarbeiten und ein Video auf die Videoanzeige zu streamen. Das Basiselement kann bei einer Ausführungsform so an der Innenseite eines Kotflügels befestigt sein, dass das distale Ende der Videokamera in der Ruheposition bündig mit der Außenseite des Kotflügel abschließt. Bei einer anderen Ausführungsform kann die Videokamera gedreht werden.

Die DE 103 36 681 A1 betrifft ein Kraftfahrzeug mit einer Einrichtung zur Umfelderfassung, umfassend ein Erfassungsmittel und ein Mittel zur Analyse der vom Erfassungsmittel gegebenen Informationen zur Ermittlung eines im Umfeld befindlichen Objekts, und mit einer über eine Steuerungseinrichtung in Abhängigkeit des Ermittlungsergebnisses derart ansteuerbaren Leuchteinrichtung, dass das ermittelte Objekt individuell beleuchtbar ist.

Aus der DE 203 19 579 U1 ist eine Leuchte, insbesondere Bremsleuchte, mit einem Gehäuse und wenigstens einem Leuchtelement bekannt, wobei in dem Gehäuse eine Kamera integriert ist. Dabei ist die Kamera mittels einer Kugelgelenkhalterung schwenkbar gelagert ist.

Eine Blinkerleuchte mit: einem Leuchtenkörper; einer äußeren Abdeckung, die mit dem Leuchtenkörper eine Leuchtenkammer bildet; einer Lichtquelle, die in der Leuchtenkammer montiert ist; einem Lichtleiter, der in der Leuchtenkammer montiert und ausgebildet ist, Licht, das von der Lichtquelle ausgesendet wird, zu führen; und einer Kamera, die in der Leuchtenkammer montiert und mit einer Bildaufnahmeeinrichtung versehen ist, ist aus der DE 10 2016 200 183 A1 bekannt. Wenn die Blinkerleuchte an der Fahrzeugoberfläche angebracht ist, ist zumindest ein Teil des Lichtleiters in einem Bereich ausgebildet, der sich von der Kamera in einer Richtung erstreckt, die einer Fahrzeugoberfläche folgt.

Die DE 10 2015 113 725 A1 betrifft ein Kameramodul für ein Kraftfahrzeug mit einer Karosserie, wobei das Kameramodul mindestens eine Kameraeinheit mit einem Gehäuse und eine Antriebseinheit für die Kameraeinheit umfasst, wobei die Kameraeinheit mit der Antriebseinheit gekoppelt ist und die Kameraeinheit durch die Antriebseinheit in mindestens zwei Stellungen bewegbar ist, insbesondere in eine aktive Stellung zur bildlichen Erfassung des Außenbereichs und in eine inaktiven Stellung, und die Karosserie einen Abschnitt aufweist, der mit einer Öffnung versehen ist, welche dem Kameramodul zugeordnet ist, und wobei in der inaktiven Stellung der Kameraeinheit die Öffnung durch das Kameramodul verschließbar ist.

Die DE 10 2014 217 864 A1 beschreibt eine Kraftfahrzeugkamera, welche zumindest teilweise in einem Gehäuse gehalten ist, welches an oder in einem Kraftfahrzeug installiert ist, wobei wenigstens ein Leuchtmittel zur Ausleuchtung zumindest eines Teilbereichs der Kameraumgebung vorhanden ist. Das Gehäuse ist dabei zumindest teilweise lichtleitend ausgebildet, und wenigstens ein Leuchtmittel ist derart positioniert, dass damit Licht in den lichtleitenden Teil des Gehäuses einkoppelbar und in Richtung des auszuleuchtenden Teilbereichs der Kameraumgebung auskoppelbar ist.

Aus der DE 10 2008 012 033 A1 ist ein Kraftfahrzeug mit einer Kamera bekannt zur Überwachung einer Umgebung, insbesondere eines rückwärtigen Verkehrsraums, wobei die Kamera von einer eingefahrenen Position in eine ausgefahrene Position und wieder zurück verfahrbar ist. Die Kamera ist dabei in der eingefahrenen Position mit zwei verschwenkbaren Klappen vollständig abgedeckt.

Die DE 10 2014 013 673 A1 bezieht sich auf eine Halterung für eine Rückfahrkamera eines Kraftfahrzeugs, die im Bereich eines Heckbereichs des Kraftfahrzeugs montierbar ist und eine Ruhestellung sowie eine Betriebsstellung aufweist und zwischen den beiden Stellungen motorisch bewegbar ist, wobei die Halterung mindestens einen Scheinwerfer zur Ausleuchtung der Umgebung hinter dem Kraftfahrzeug aufweist.

Die DE 10 2015 007 179 A1 lehrt eine Umgebungserfassungseinrichtung für einen Kraftwagen, mit einer Kamera zum Erfassen von Licht aus einer Umgebung des Kraftwagens; und einer Umlenkeinrichtung, mittels welcher Licht der Umgebung aus zumindest zwei entgegengesetzten Richtungen zu der Kamera hin umlenkbar ist, wobei die Umlenkeinrichtung zwischen einer Ruhelage und wenigstens einer Gebrauchslage verfahrbar angeordnet ist.

Die bekannten Bewegungsmechanismen sind in der Regel sehr aufwändig und benötigen eine komplexe Mechanik, was wiederum den notwendigen Bauraum vergrößert.

Es ist daher die Aufgabe der vorliegenden Erfindung, die bekannte bewegbare Beleuchtungs- und Bildaufnahme-Einheit für ein Kraftfahrzeug derart weiterzuentwickeln, dass sie besonders kompakt und einfach in der Konstruktion ist. Es ist ferner Aufgabe der vorliegenden Erfindung, ein Kraftfahrzeug mit einer solchen Kameraanordnung bereitzustellen.

Die die bewegbare Beleuchtungs- und Bildaufnahme-Einheit betreffende Aufgabe wird erfindungsgemäß durch die Merkmale des Kennzeichens von Anspruch 1 gelöst.

Bevorzugte Ausführungsbeispiele sind in den Ansprüchen 2 bis 9 beschrieben.

Eine Beleuchtungs- und Bildaufnahme-Einheit zum bewegbaren Anbringen an einem Fahrzeugkörper kann mit einem bewegbaren Abschnitt, der einen Bildaufnahmeabschnitt mit zumindest einer Kamera, einen Beleuchtungsabschnitt mit zumindest einer Lichtquelle und einen Abschlussabschnitt trägt, ausgestattet sein, wobei zumindest der bewegbare Abschnitt zwischen einer Ruhe- und Verstauposition, in der der Abschlussabschnitt eine Aufnahme in dem Fahrzeugkörper abschließt, und zumindest einer Betriebsposition, in der die Kamera Videobilder aufnehmen und die Lichtquelle Licht aussenden kann, translatorisch und rotatorisch bewegbar ist, wobei die Translationsrichtung zumindest teilweise im Wesentlichen senkrecht zu einer Außenfläche des Fahrzeugkörpers und/oder im Wesentlich horizontal verläuft, und wobei die zumindest eine Lichtquelle Bestandteil eines Seitenbegrenzungslichts, einer Umfeldbeleuchtung, einer Signal- oder Warnleuchte, eines Blinkers, eines Camper-Lichts, einer Laseranzeige, einer Logolampe, einer Bodenleuchte und/oder eines Projektors ist.

Dabei kann vorgesehen sein, dass der bewegbare Abschnitts als Arm ausgebildet ist, der translatorisch und rotatorisch, vorzugsweise über zumindest eine erste Antriebseinheit, bewegbar ist, und/oder der Bildaufnahmeabschnitt translatorisch und/oder rotatorisch relativ zum Beleuchtungsabschnitt, vorzugsweise über zumindest eine zweite Antriebseinheit, bewegbar ist, und/oder die Kamera in dem Bildaufnahmeabschnitt translatorisch und/oder rotatorisch, vorzugsweise über zumindest eine dritte Antriebseinheit, bewegbar ist, und/oder die Lichtquelle in dem Beleuchtungsabschnitt translatorisch und/oder rotatorisch, vorzugsweise über zumindest eine vierte Antriebseinheit, bewegbar ist.

Alternativ kann ein bewegbares Kameragehäuse vorgesehen sein, das den Bildaufnahmeabschnitt, den bewegbare Abschnitt und den Abschlussabschnitt umfasst und das entlang einer Freiformkurve bewegbar ist, wobei die Freiformkurve ausgehend von der Ruhe- und Verstauposition einen erster Bewegungsabschnitt, der eine erste translatorische Bewegungskomponente und ggf. eine erste rotatorische Bewegungskomponente umfasst, und einen zweiten Bewegungsabschnitt, der eine zweite rotatorische Bewegungskomponente und ggf. eine zweite translatorische Bewegungskomponente umfasst, aufweist.

Ferner kann vorgeschlagen sein, dass die Kamera und/oder die Lichtquelle und/oder die erste, zweite, dritte und/oder vierte Antriebseinheit von einer Kontrolleinheit ansteuerbar ist bzw. sind, in Abhängigkeit von zumindest einem Fahrzeugparameter, zumindest einer Eingabe eines Fahrers und/oder Signalen von zumindest einer Sensoreinheit.

Die erste, zweite, dritte und/oder vierte Antriebseinheit, die Kontrolleinheit und/oder die Sensoreinheit kann/können zumindest teilweise in dem Bildaufnahmeabschnitt, dem Beleuchtungsabschnitt und/oder dem Abschlussabschnitt angeordnet sein.

Ferner kann vorgeschlagen sein, dass eine Vielzahl von, insbesondere individuell ansteuerbaren, Lichtquellen vorgesehen ist, und/oder eine Vielzahl von, insbesondere individuell mit Licht einspeisbaren, Lichtleitern mit der zumindest einen Lichtquelle vorgesehen ist, wobei vorzugsweise Farbe, Intensität und/oder Einschaltzeiten ansteuerbar sind.

Zudem kann vorgesehen sein, dass der Abschlussabschnitt als ein Abschlussteil lösbar oder austauschbar und/oder an dem Beleuchtungsabschnittt angebracht ist.

Dabei kann auch vorgesehen sein, dass die erste rotatorische Bewegungskomponente kleiner ist als die zweite rotatorische Bewegungskomponente, und/oder die erste translatorische Bewegungskomponente größer ist als die zweite translatorische Bewegungskomponente.

Ferner kann auch vorgesehen sein, dass die Translationsrichtung der ersten und/oder zweiten translatorischen Bewegungskomponente im Wesentlichen senkrecht zu einer Außenfläche des Außenverkleidungsteils und/oder im Wesentlich horizontal verläuft.

Zudem kann auch vorgesehen sein, dass die Drehachse der ersten und/oder zweiten rotatorischen Bewegungskomponente sich von der Translationsrichtung unterscheidet.

Vorteilhafterweise kann vorgesehen sein, dass die Drehrichtung von der Ruhe- und Verstauposition in die Betriebsposition im Uhrzeigersinn oder gegen den Uhrzeigersinn verläuft.

Weiterhin kann vorgeschlagen sein, dass der Bildaufnahmeabschnitt um mehr als 90° und weniger als 180°, insbesondere um etwa 100°, zum bewegbare Abschnitt, der als Basisteil ausgeformt ist, abgewinkelt ist und den Abschlussabschnitt umfasst.

Auch kann vorgeschlagen sein, dass die Freiformkurve durch eine Führungskulisse in der Aufnahme definiert ist.

Weiterhin kann in dem Kameragehäuse eine weitere Komponente angebracht oder anbringbar sein, zusätzlich zu der Lichtquelle, vorzugsweise in Form einer Reinigungsvorrichtung und/oder einer Heizeinrichtung für die Kamera.

Eine Öffnung kann in dem Fahrzeugkörper für den Durchtritt zumindest der Kamera vorgesehen sein, wobei beim Passieren der Öffnung durch die Kamera von dem ersten Bewegungsabschnitt in den zweiten Bewegungsabschnitt ausgehend von der Ruhe- und Verstauposition und/oder von dem zweiten Bewegungsabschnitt in den ersten Bewegungsabschnitt ausgehend von der Betriebsposition wechselbar ist.

Die Erfindung liefert auch ein Kraftfahrzeug mit zumindest einer erfindungsgemäßen Beleuchtungs- und Bildaufnahme-Einheit.

Dabei kann vorgesehen sein, dass die erste, zweite, dritte und/oder vierte Antriebseinheit, die Kontrolleinheit und/oder die Sensoreinheit zumindest teilweise in dem Kraftfahrzeug angeordnet ist/sind.

Mit der Erfindung wird auch vorgeschlagen, dass die Aufnahme in dem Fahrzeugkörper einen ersten Aufnahmebereich komplementär zum Bildaufnahmeabschnitt und einen zweiten Aufnahmebereich komplementär zum Beleuchtungsabschnitt umfasst.

Zudem kann vorgesehen sein, dass sich der bewegbare Abschnitt durch eine Öffnung, die durch die Wandung des Fahrzeugkörpers verläuft, erstreckt.

Schließlich wird erfindungsgemäß vorgeschlagen, dass der Abschlussabschnitt bündig mit dem Fahrzeugkörper in der Ruhe- und Verstauposition des bewegbaren Abschnitts abschließt.

Es ist ein Aspekt der Erfindung, dass durch die erfindungsgemäße Beleuchtungs- und Bildaufnahme-Einheit eine Rückblickvorrichtung bereitgestellt werden kann, die auch außerhalb der aktuellen gesetzlichen Vorschriften operieren kann und die dann durch Ausnahmegenehmigungen bzw. eine Anpassung der gesetzlichen Bestimmungen trotzdem für den Betrieb zugelassen werden kann. Eine solche Rückblickvorrichtung kann als besonders erfinderisch angesehen werden, da sie eine Lösung außerhalb des vorgegebenen vorbekannten Rahmens bereitstellt.

Die Rückblickvorrichtung kann auch mit verschiedenen Beleuchtungseinrichtungen ausgerüstet werden.

Verschiedene Funktionen und Geräte können in Rückblickvorrichtungen eingebaut und/oder mit Hilfe von Rückblickvorrichtungen gesteuert werden, wobei insbesondere auch Kamerasysteme umfasst sind.

Weitere Vorteile und Merkmale der Erfindung ergeben sich aus der nachfolgenden Beschreibung eines bevorzugten Ausführungsbeispiels unter Bezugnahme auf die beigefügten Zeichnungen.
- Fig. 1: zeigt eine Schnittansicht einer ersten, erfindungsgemäßen Beleuchtungs- und Bildaufnahme-Einheit in ihrer Ruhe- und Verstaupositionen;
- Fig. 2: die Beleuchtungs- und Bildaufnahme-Einheit von Fig. 1 in einer Betriebsposition;
- Fig. 3: eine schematische Schnittansicht einer zweiten Beleuchtungs- und Bildaufnahme-Einheit in ihrer Betriebsposition;
- Fig. 4: die Beleuchtungs- und Bildaufnahme-Einheit nach Fig. 3 in schematischer perspektivischer Darstellung;
- Fig. 5: die Beleuchtungs- und Bildaufnahme-Einheit nach Fig. 3 in schematischer Schnittansicht in der Ruhe- und Verstauposition und der Betriebsposition;
- Fig. 6: die Beleuchtungs- und Bildaufnahme-Einheit nach Fig. 3 in schematischer Schnittansicht in unterschiedlichen Betriebspositionen;
- Fig. 7: eine Detailansicht einer dritten Beleuchtungs- und Bildaufnahme-Einheit in der Ruheund Verstauposition und der Betriebsposition;
- Fig. 8: eine Detailansicht eines Kameragehäuses der Beleuchtungs- und Bildaufnahme-Einheit nach Fig. 7 in der Ruhe- und Verstauposition und der Betriebsposition; und
- Fig. 9: einen schematischer Graph zur Veranschaulichung unterschiedlicher Verschwenkpfade eines Ausführungsbeispiels einer Beleuchtungs- und Bildaufnahme-Einheit zwischen deren Ruhe- und Verstauposition und deren Betriebsposition.

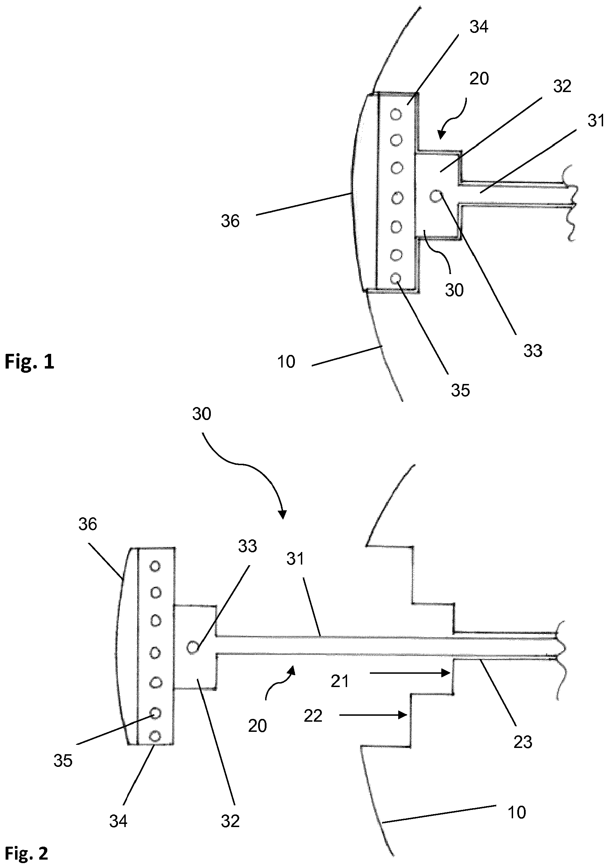

Die Figuren 1 und 2 zeigen einen Abschnitt eines Fahrzeugkörperes 10 mit einer Aufnahme 20 für eine erste erfindungsgemäße Beleuchtungs- und Bildaufnahme-Einheit 30.

Die Beleuchtungs- und Bildaufnahme-Einheit 30 umfasst einen verfahrbaren Arm 31, der einen bewegbaren Abschnitt bildet sowie einen Bildaufnahmeabschnitt in Form eines Bildaufnahmeteils 32 mit einer Videokamera 33, einen Beleuchtungsabschnitt in Form eines Beleuchtungsteils 34 mit einer Vielzahl von Lichtquellen 35 und einen Abschlußabschnitt in Form eines Abschlussteils 36 trägt. In der eingefahrenen Position des Arms 31, die in Figur 1 dargestellt ist und im Folgenden als Ruhe- und Verstauposition bezeichnet wird, schließt das Abschlussteil 36 bündig mit der Außenfläche des Fahrzeugkörpers 10 ab, indem der Arm 31, das Bildaufnahmeteil 32 und das Beleuchtungsteil 34 in der Aufnahme 20 angeordnet sind.

Die Beleuchtungs- und Bildaufnahme-Einheit 30 ist also in der Aufnahme 20 und somit der Karosserie des Fahrzeugs versenkbar, so dass sie in der Ruhe- und Verstauposition von außen nicht sichtbar ist. Zu diesem Zwecke umfasst die Aufnahme 20 einen ersten Aufnahmebereich 21 für das Bildaufnahmeteil 32 und einen zweiten Aufnahmebereich für das Beleuchtungsteil 34. Der Arm 31 ist in einer Öffnung 23 verfahrbar, und zwar von der Ruhe- und Verstauposition in eine Betriebsposition, wie sie in Figur 2 gezeigt ist.

Es können mehrere Betriebspositionen vorgesehen sein, in denen der Arm 31 das Bildaufnahmeteil 32 und das Beleuchtungsteil 34 unterschiedlich weit aus der Aufnahme 20 ausfährt. So kann es eine erste Betriebsposition für eine Fahrt in verengten Gassen, eine zweite Betriebsposition für einen normalen Fahrtbetrieb und eine dritte Betriebsposition für eine Fahrt mit Anhänger geben.

Der Arm 31 führt zu einem Positionswechsel eine tanslatorische Bewegung aus. Zudem ist der Arm 31 verdrehbar. Zu diesem Zwecke ist der Arm mit einer nicht gezeigten Kontrolleinheit und einer nicht gezeigten Antriebseinheit verbunden.

Die Kontrolleinheit kann innerhalb des Fahrzeuges angeordnet sein, z.B. als Teil des Bord-Computers. Sie kann in Abhängigkeit von Fahrzeugparametern, Eingaben eines Fahrers und/oder Signalen von Sensoreinheiten die Antriebseinheit ansteuern. Wird z.B. ein Anhänger an den Fahrzeugkörper 10 angekoppelt, kann automatisch bei Motorstart in die dritte Betriebsposition gewechselt werden. Oder bei Erfassung einer engen Gasse durch einen Radarsensor am Fahrzeugkörper 10 wird automatisch in die erste Betriebsposition gewechselt.

Mit der Kontrolleinheit sind zudem die Videokamera 33 zum Aufnehmen von Videobildern und die Lichtquellen 35 zum Aussenden von Licht verbunden. Ferner kann die Kontrolleinheit auch ein Bewegen, insbesondere Drehen,
- der Videokamera 33 in dem Bildaufnahmeteil 32;
- des Bildaufnahmeteils 32 relativ zum Beleuchtungsteil 34; und/oder
- der Lichtquellen 35 in dem Beleuchtungsteil 34; und/oder
bewirken. Dabei kann für das Bildaufnahmeteil 32 und/oder das Beleuchtungsteil 34 zumindest eine weitere, nicht gezeigte Antriebseinheit zum Einsatz kommen, die in dem Bildaufnahmeteil 32 und/oder dem Beleuchtungsteil 34 angeordnet sein kann, aber mit der Kontrolleinheit verbunden ist.

Die Videokamera 33 kann mithin für unterschiedliche Sichten, wie eine Fahrtsicht, eine Rücksicht, eine Bodensicht oder dergleichen zum Einsatz kommen.

Auch die Lichtquellen 35 können unterschiedlichste Funktionen erfüllen, insbesondere je nach Positionierung des Beleuchtungsteils 34 relativ zum Fahrzeug. So kann eine Blinkfunktion, eine Warnanzeige oder eine Umfeldbeleuchtung über das Beleuchtungsteil 34 realisiert werden. Ist bspw. der Arm 31 in die dritte Betriebsfunktion ausgefahren, so kann das Beleuchtungsteil 34 ein Camper-Licht liefern. Wird bspw. der Arm 31 gedreht, so kann dennoch immer die gleiche Stelle z. B. auf einem Boden ausgeleuchtet werden, indem die unterschiedlichen Lichtquellen 35 in Abhängigkeit von der jeweiligen Drehstellung ein- bzw. ausgeschaltet werden. Bei einer Vielzahl an individuell ansteuerbaren Lichtquellen 35 können somit zahlreiche Lichteffekte realisiert werden.

Eine drehbare Einheit aus dem Bildaufnahmeteil 32 und dem Beleuchtungsteil 34 erzwingt eine rotationssymmetrische Gestalt, während bei nicht drehbaren Ausgestaltungen zahlreich Design-Freiheiten vorliegen.

Das Abschlusssteil kann lösbar angebracht sein, um bei Beschädigung und/oder aus Designgründen leicht austauschbar zu sein. Es kann bspw. mit einem Logo, einer Botschaft oder dergleichen versehen sein.

Die erste erfindungsgemäße Beleuchtungs- und Bildaufnahme-Einheit eröffnet zahlreiche Einsatzmöglichkeiten in unterschiedlichsten Kraftfahrzeugen, wie Personenkraftwagen, Lastkraftwagen, Wohnmobilen, Motorrädern und dergleichen.

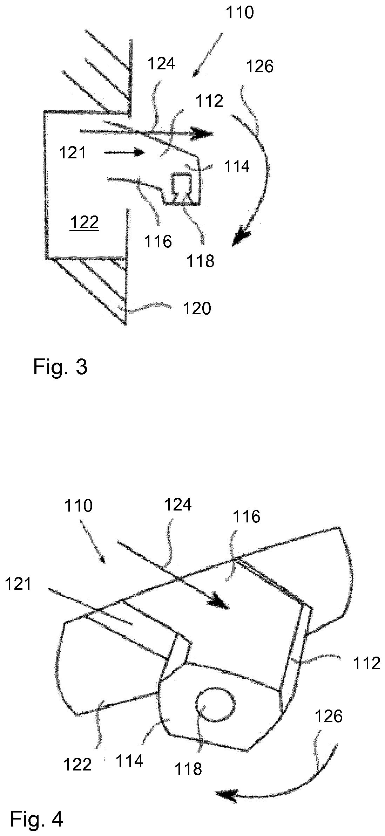

Bei einer in den Figuren 3 bis 6 im Ganzen mit 110 bezeichneten, zweiten bewegbaren Beleuchtungs- und Bildaufnahme-Einheit ist nur die Kameraanordnung für ein Kraftfahrzeug zu sehen, während weitere Komponenten, insbesondere Lichtquellen, der Übersichtlichkeit zu Liebe nicht dargestellt sind. Die Kameraanordnung umfasst ein Kameragehäuse 112 mit einem Kameraaufnahmeabschnitt 114 und einem Basisabschnitt 116. Im Kameraaufnahmeabschnitt 114, der um etwa 100° gegen den Basisabschnitt 116 abgewinkelt ist, ist eine Kamera 118 aufgenommen.

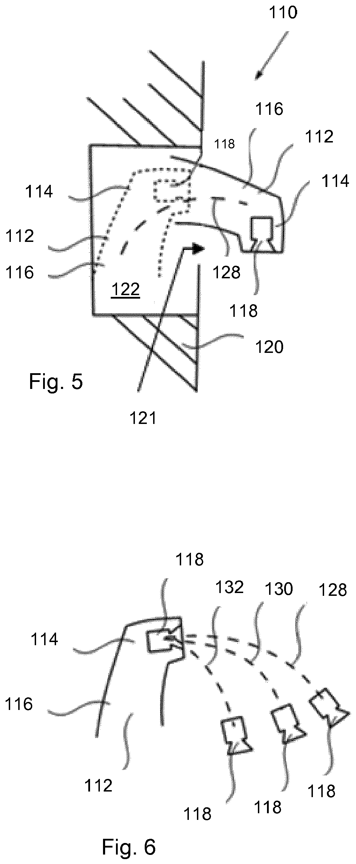

Das Kameragehäuse 112 ist in einer Aufnahme 122 eines Außenverkleidungsteils 120 des Kraftfahrzeugs aufnehmbar. Die Aufnahme 122 weist eine Öffnung 121 zum Durchtritt zumindest eines Teils des Kameragehäuses 112 auf. Aus der in Fig. 5 strichliert gezeigten Ruhe- und Verstauposition kann das Kameragehäuse 112 durch die Öffnung 121 in eine Betriebsposition verschwenkt werden, in der das Kameragehäuse 112 seitlich vom Außenverkleidungsteil 120 herausragt, wie in Fig. 5 durch die durchgezogenen Linie dargestellt. Das Maß des Herausragens hängt vom erwünschten Sichtbereich der Kamera 118 ab.

Der Bewegungsablauf des Kameragehäuses 112 zwischen der Ruhe- und Verstauposition und der Betriebsposition umfasst eine Überlagerung aus einer Verschiebung entlang einer Translationsrichtung, die durch einen Pfeil 124 gekennzeichnet ist und im Wesentlichen senkrecht zu einer Außenfläche des Außenverkleidungsteils 122 verläuft, und einer Drehung im Uhrzeigersinn, wie mit dem Pfeil 126 in Fig. 3 und 4 veranschaulicht. Hieraus resultiert eine Bewegung entlang einer Freiformkurve 128, wie in Fig. 5 dargestellt. Unter Freiformkurven sollen hier insbesondere Kurven verstanden werden, die keinen konstanten Radius aufweisen und die insbesondere eine kontinuierliche Änderung ihrer Tangentensteigung bzw. ihres Kurvenradius aufweisen.

Demnach umfasst die Bewegung einen ersten Bewegungsabschnitt, in dem die Verschiebung entlang des Pfeils 124 überwiegt, während in einem zweiten Bewegungsabschnitt die Drehung entlang des Pfeils 126 überwiegt. Ein solcher Bewegungsverlauf kann beispielsweise durch eine entsprechende, nicht gezeigte Führungskulisse verwirklicht werden. Eine solche Führungskulisse kann leicht an unterschiedliche Gegebenheiten angepasst werden, so dass beispielsweise das gleiche Kameragehäuse in unterschiedlichen Kraftfahrzeugen mit verschiedener Geometrie des Außenverkleidungsteils 122 eingesetzt werden kann. Auch die Verwendung in unterschiedlichen Einbaupositionen im Kraftfahrzeug, beispielsweise als seitliche Rückblickkamera oder als Heckkamera ist so möglich.

Fig. 6 zeigt exemplarisch unterschiedliche mögliche Freiformkurven 128, 130, 132, die jeweils in unterschiedlichen Einbaulagen oder bei unterschiedlichen Bauteilgeometrien Anwendung finden können. Dabei ist der Übersichtlichkeit halber jeweils nur die Kamera 118 in der Betriebsposition gezeigt. Selbstverständlich betrifft auch hier die Bewegung das gesamte Kameragehäuse 112.

Es ist dabei auch möglich, unterschiedliche Bewegungsabläufe aus der gleichen Einbaulage im gleichen Kraftfahrzeug zu verwirklichen. Beispielsweise kann die Kameraposition angepasst werden, je nachdem, ob ein Anhänger mit dem Kraftfahrzeug gekoppelt ist, oder nicht.

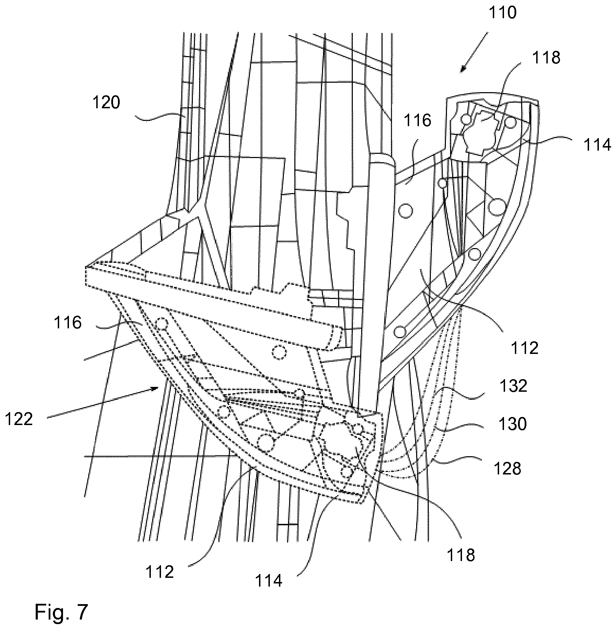

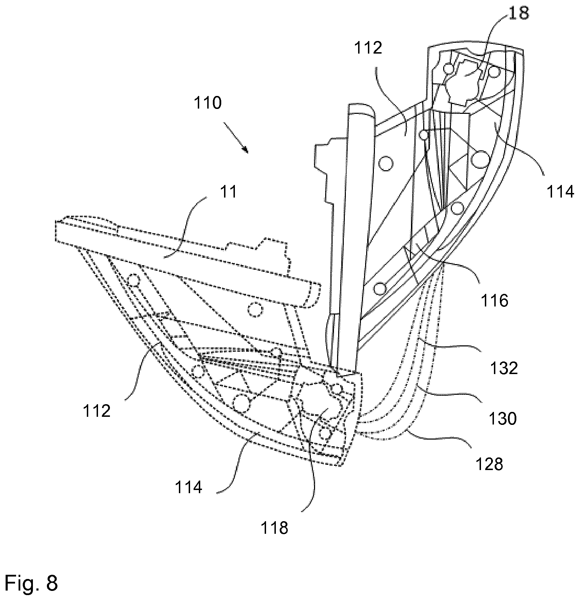

In den Figuren 7 und 8 ist ein Ausführungsbeispiel für eine Kameraanordnung 110 einer dritten Beleuchtungs- und Bildaufnahme-Einheit nochmals in näherem Detail dargestellt. Die Figuren zeigen das Kameragehäuse 112 strichliert in der Ruhe- und Verstauposition und mit durchgezogenen Linien in der Betriebsposition. Das in Fig. 7 ebenfalls gezeigte Außenverkleidungsteil 120 ist zur Veranschaulichung des Bewegungsablaufs zwischen den Positionen in Fig. 8 weggelassen.

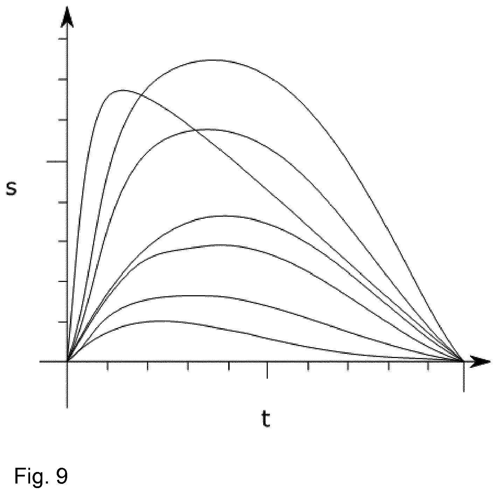

In Fig. 9 ist eine schematische graphische Darstellung unterschiedlicher Weg-Zeit-Verläufe für die Bewegung zwischen der Ruhe- und Verstauposition und der Betriebsposition des Kameragehäuses 112 gezeigt. Dies ist eine alternative Darstellung der in den Figuren 5 und 6 gezeigten Freiformkurven 128, 130, 132. Generell gilt auch hier, dass diese Verläufe reversibel sind, d.h. bei einer Bewegung von der Betriebsposition in die Ruhe- und Verstauposition werden die Verläufe bzw. Freiformkurven 128, 130, 132 in umgekehrter Richtung durchlaufen. Alternativ ist es aber auch möglich, dass bei der Bewegung von der Ruhe- und Verstauposition in die Betriebsposition eine andere Freiformkurve durchlaufen wird, als bei der Bewegung von der Betriebsposition in die Ruhe- und Verstauposition.

Insgesamt wird so eine Kameraanordnung 110 geschaffen, die besonders kompakt ist, wenig Raum für ihre Bewegung benötigt und einfach an unterschiedliche Bauteilgeometrien angepasst werden kann.

### Bezugszeichenliste

- 10: Fahrzeugkörper
- 20: Aufnahme
- 21: erster Aufnahmebereich
- 22: zweiter Aufnahmebereich
- 23: Öffnung
- 30: Beleuchtungs- und Bildaufnahme-Einheit
- 31: Arm
- 32: Bildaufnahmeteil
- 33: Videokamera
- 34: Beleuchtungsteil
- 35: Lichtquelle
- 36: Abschlussteil
- 110: Kameraanordnung
- 112: Kameragehäuse
- 114: Kameraaufnahmeabschnitt
- 116: Basisabschnitt
- 118: Kamera
- 120: Außenverkleidungsteil
- 121: Öffnung
- 122: Aufnahme
- 124: Translationsrichtung
- 126: Drehrichtung
- 128: Freiformkurve
- 130: Freiformkurve
- 132: Freiformkurve

## Patentansprüche

1. Beleuchtungs- und Bildaufnahme-Einheit (30, 110) zum bewegbaren Anbringen an einem Fahrzeugkörper (10, 120), mit einem bewegbaren Abschnitt (31, 116), der einen Bildaufnahmeabschnitt (32, 114) mit zumindest einer Kamera (33, 180), einen Beleuchtungsabschnitt (34) mit zumindest einer Lichtquelle (35) und einen Abschlussabschnitt (36) trägt,
wobei zumindest der bewegbare Abschnitt (31, 116) zwischen einer Ruhe- und Verstauposition, in der der Abschlussabschnitt (36) eine Aufnahme (20, 122) in dem Fahrzeugkörper (10, 120) abschließt, und zumindest einer Betriebsposition, in der die Kamera (33, 118) Videobilder aufnehmen und die Lichtquelle (35) Licht aussenden kann, translatorisch und rotatorisch bewegbar ist,
wobei die Translationsrichtung (124) zumindest teilweise im Wesentlichen senkrecht zu einer Außenfläche des Fahrzeugkörpers (10, 120) und/oder im Wesentlich horizontal verläuft, und
wobei die zumindest eine Lichtquelle (35) Bestandteil eines Seitenbegrenzungslichts, einer Umfeldbeleuchtung, einer Signal- oder Warnleuchte, eines Blinkers, eines Camper-Lichts, einer Laseranzeige, einer Logolampe, einer Bodenleuchte und/oder eines Projektors ist,
**dadurch gekennzeichnet, dass**
der bewegbare Abschnitt (31) als Arm ausgebildet ist, der translatorisch und rotatorisch über zumindest eines erste Antriebseinheit bewegbar ist,
wobei die erste Antriebseinheit von einer Kontrolleinheit ansteuerbar ist, in Abhängigkeit von zumindest einem Fahrzeugparameter, zumindest einer Eingabe eines Fahrers und/oder Signalen von zumindest einer Sensoreinheit, und
wobei die Kontrolleinheit zumindest teilweise in dem Bildaufnahmeabschnitt (32), dem Beleuchtungsabschnitt (34) und/oder dem Abschlussabschnitt (36) angeordnet ist.

2. Beleuchtungs- und Bildaufnahme-Einheit nach Anspruch 1, **dadurch gekennzeichnet, dass**
• der Bildaufnahmeabschnitt (32) translatorisch und/oder rotatorisch relativ zum Beleuchtungsabschnitt (34) über zumindest eines zweite Antriebseinheit bewegbar ist, und/oder
• die Kamera (33) in dem Bildaufnahmeabschnitt (32) translatorisch und/oder rotatorisch über zumindest eines dritte Antriebseinheit bewegbar ist, und/oder
• die Lichtquelle (35) in dem Beleuchtungsabschnitt (34) translatorisch und/oder rotatorisch über zumindest eines vierte Antriebseinheit bewegbar ist.

3. Beleuchtungs- und Bildaufnahme-Einheit nach Anspruch 1 oder 2, **dadurch gekennzeichnet, dass**
die Kamera (33) und die Lichtquelle (35) von einer Kontrolleinheit ansteuerbar sind, in Abhängigkeit von zumindest einem Fahrzeugparameter, zumindest einer Eingabe eines Fahrers und/oder Signalen von zumindest einer Sensoreinheit.

4. Beleuchtungs- und Bildaufnahme-Einheit nach Anspruch 2 oder 3, **dadurch gekennzeichnet, dass**
die zweite, dritte und/oder vierte Antriebseinheit von der Kontrolleinheit ansteuerbar ist bzw. sind, in Abhängigkeit von zumindest einem Fahrzeugparameter, zumindest einer Eingabe eines Fahrers und/oder Signalen von zumindest einer Sensoreinheit.

5. Beleuchtungs- und Bildaufnahme-Einheit nach einem der Ansprüche 2 bis 4, **dadurch gekennzeichnet, dass**
die zweite, dritte und/oder vierte Antriebseinheit zumindest teilweise in dem Bildaufnahmeabschnitt (32), dem Beleuchtungsabschnitt (34) und/oder dem Abschlussabschnitt (36) angeordnet ist bzw. sind.

6. Beleuchtungs- und Bildaufnahme-Einheit nach einem der vorangehenden Ansprüche, **dadurch gekennzeichnet, dass**
die Sensoreinheit zumindest teilweise in dem Bildaufnahmeabschnitt (32), dem Beleuchtungsabschnitt (34) und/oder dem Abschlussabschnitt (36) angeordnet ist.

7. Beleuchtungs- und Bildaufnahme-Einheit nach einem der vorangehenden Ansprüchen, **dadurch gekennzeichnet, dass**
eine Vielzahl von Lichtquellen (35) vorgesehen ist, und/oder
eine Vielzahl von Lichtleitern mit der zumindest einen Lichtquelle vorgesehen ist.

8. Beleuchtungs- und Bildaufnahme-Einheit nach einem der vorangehenden Ansprüchen, **dadurch gekennzeichnet, dass**
der Abschlussabschnitt (36) als ein Abschlussteil (36) lösbar oder austauschbar und/oder an dem Beleuchtungsabschnitt (34) angebracht ist.

9. Beleuchtungs- und Bildaufnahme-Einheit nach einem der vorangehenden Ansprüche **dadurch gekennzeichnet, dass**
die Drehrichtung (126) von der Ruhe- und Verstauposition in die Betriebsposition im Uhrzeigersinn oder gegen den Uhrzeigersinn verläuft.

10. Kraftfahrzeug mit zumindest einer Beleuchtungs- und Bildaufnahme-Einheit (30, 110) nach einem der vorangehenden Ansprüche.

11. Kraftfahrzeug nach Anspruch 10, **dadurch gekennzeichnet, dass** die erste, zweite, dritte und/oder vierte Antriebseinheit zumindest teilweise in dem Kraftfahrzeug angeordnet ist/sind.

12. Kraftfahrzeug nach Anspruch 10 oder 11, **dadurch gekennzeichnet, dass** die Kontrolleinheit und/oder die Sensoreinheit zumindest teilweise in dem Kraftfahrzeug angeordnet ist/sind.

13. Kraftfahrzeug nach einem der Ansprüche 10 bis 13, **dadurch gekennzeichnet, dass** die Aufnahme (20) in dem Fahrzeugkörper (10) einen ersten Aufnahmebereich (21) komplementär zum Bildaufnahmeabschnitt (32) und einen zweiten Aufnahmebereich (22) komplementär zum Beleuchtungsabschnitt (34) umfasst.

14. Kraftfahrzeug nach einem der Ansprüche 10 bis 13, **dadurch kennzeichnet, dass** sich der bewegbare Abschnitt (31) durch eine Öffnung (23), die durch die Wandung des Fahrzeugkörpers verläuft, erstreckt.

15. Kraftfahrzeug nach einem der Ansprüche 10 bis 14, **dadurch kennzeichnet, dass** der Abschlussabschnitt (36) bündig mit dem Fahrzeugkörper (10) in der Ruhe- und Verstauposition des bewegbaren Abschnitts (31) abschließt.

## Claims

1. A lighting and image-recording unit (30, 110) for movably attaching to a vehicle body (10, 120), having a movable section (31, 116) which carries an image-recording section (32, 114) having at least one camera (33, 180), a lighting section (34) having at least one light source (35), and an end section (36),
wherein at least the movable section (31, 116) is translationally and rotationally movable between a rest and stow position in which the end section (36) terminates a receptacle (20, 122) in the vehicle body (10, 120), and at least one operating position in which the camera (33, 118) can record video images and the light source (35) can emit light,
wherein the direction of translation (124) runs at least partially substantially perpendicularly to an outer surface of the vehicle body (10, 120) and/or substantially horizontally, and
wherein the at least one light source (35) is a component of a side boundary light, an ambient lighting, a signal or warning light, a turn signal, a camper light, a laser display, a logo lamp, a floor light and/or a projector,
**characterized in that**
the movable section (31) is configured as an arm which is translationally and rotationally movable via at least one first drive unit,
wherein the first drive unit is controllable by a control unit depending on at least one vehicle parameter, at least one input from a driver, and/or signals from at least one sensor unit, and
wherein the control unit is arranged at least partially in the image-recording section (32), the lighting section (34) and/or the end section (36).

2. The lighting and image-recording unit according to Claim 1, **characterized in that**
• the image-recording section (32) is translationally and/or rotationally movable relative to the lighting section (34) via at least one second drive unit, and/or
• the camera (33) in the image-recording section (32) is translationally and/or rotationally movable via at least one third drive unit, and/or
• the light source (35) in the lighting section (34) is translationally and/or rotationally movable via at least one fourth drive unit.

3. The lighting and image-recording unit according to Claim 1 or 2, **characterized in that** the camera (33) and the light source (35) is controllable by a control unit depending on at least one vehicle parameter, at least one input from a driver and/or signals from at least one sensor unit.

4. The lighting and image-recording unit according to Claim 2 or 3, **characterized in that** the second, third and/or fourth drive unit is controllable by the control unit depending on at least one vehicle parameter, at least one input from a driver and/or signals from at least one sensor unit.

5. The lighting and image-recording unit according to any one of Claims 2 to 4, **characterized in that**
the second, third and/or fourth drive unit is or are arranged at least partially in the image-recording section (32), the lighting section (34) and/or the end section (36).

6. The lighting and image-recording unit according to any one of the preceding claims, **characterized in that**
the sensor unit is arranged at least partially in the image-recording section (32), the lighting section (34) and/or the end section (36).

7. The lighting and image-recording unit according to any one of the preceding claims, **characterized in that**
a plurality of light sources (35) is provided, and/or
a plurality of light guides having the at least one light source is provided.

8. The lighting and image-recording unit according to any one of the preceding claims, **characterized in that**
the end section (36) is attached detachably or exchangeably as an end part (36) and/or is attached to the lighting section (34).

9. The lighting and image-recording unit according to any one of the preceding claims, **characterized in that**
the direction of rotation (126) from the rest and stow position to the operating position runs in a clockwise or anti-clockwise direction.

10. A motor vehicle having at least one lighting and image-recording unit (30, 110) according to any one of the preceding claims.

11. The motor vehicle according to Claim 10, **characterized in that** the first, second, third and/or fourth drive unit is/are at least partially arranged in the motor vehicle.

12. The motor vehicle according to Claim 10 or 11, **characterized in that** the control unit and/or the sensor unit is/are at least partially arranged in the motor vehicle.

13. The motor vehicle according to any one of Claims 10 to 13, **characterized in that** the receptacle (20) in the vehicle body (10) comprises a first receptacle area (21) complementary to the image-recording section (32) and a second receptacle area (22) complementary to the lighting section (34).

14. The motor vehicle according to any one of Claims 10 to 13, **characterized in that** the movable section (31) extends through an opening (23) which extends through the wall of the vehicle body.

15. The motor vehicle according to any one of Claims 10 to 14, **characterized in that** the end section (36) terminates flush with the vehicle body (10) in the rest and stow position of the movable section (31).

## Revendications

1. Unité d'éclairage et d'enregistrement d'images (30, 110) destinée à être installée de manière mobile sur un corps de véhicule (10, 120), comprenant une section mobile (31, 116), qui porte une section d'enregistrement d'images (32, 114) pourvue d'au moins une caméra (33, 180), une section d'éclairage (34) pourvue d'au moins une source de lumière (35) et une section de terminaison (36),
au moins la section mobile (31, 116) pouvant être déplacée par translation et par rotation entre une position de repos et de rangement, dans laquelle la section de terminaison (36) termine un logement (20, 122) dans le corps de véhicule (10, 120), et au moins une position de fonctionnement, dans laquelle la caméra (33, 118) peut enregistrer des images vidéo et la source de lumière (35) peut émettre de la lumière,
la direction de translation (124) s'étendant au moins en partie essentiellement perpendiculairement à une surface extérieure du corps de véhicule (10, 120) et/ou essentiellement horizontalement, et
l'au moins une source de lumière (35) étant un constituant d'une lumière de délimitation latérale, d'un éclairage d'environnement, d'un système lumineux de signalisation ou d'un témoin lumineux, d'un clignotant, d'une lumière de camping, d'un indicateur laser, d'une lampe logo, d'un système lumineux de sol et/ou d'un projecteur,
**caractérisée en ce que**
la section mobile (31) est configurée sous la forme d'un bras, qui peut être déplacé par translation et par rotation par l'intermédiaire d'au moins une première unité d'entraînement,
la première unité d'entraînement pouvant être commandée par une unité de contrôle en fonction d'au moins un paramètre de véhicule, d'au moins une entrée d'un conducteur et/ou de signaux d'au moins une unité de capteur, et
l'unité de contrôle étant au moins partiellement disposée dans la section d'enregistrement d'images (32), la section d'éclairage (34) et/ou la section de terminaison (36).

2. Unité d'éclairage et d'enregistrement d'images selon la revendication 1, **caractérisée en ce que**
• la section d'enregistrement d'images (32) peut être déplacée par translation et/ou par rotation par rapport à la section d'éclairage (34) par l'intermédiaire d'au moins une deuxième unité d'entraînement, et/ou
• la caméra (33) dans la section d'enregistrement d'images (32) peut être déplacée par translation et/ou par rotation par l'intermédiaire d'au moins une troisième unité d'entraînement, et/ou
• la source de lumière (35) dans la section d'éclairage (34) peut être déplacée par translation et/ou par rotation par l'intermédiaire d'au moins une quatrième unité d'entraînement.

3. Unité d'éclairage et d'enregistrement d'images selon la revendication 1 ou 2, **caractérisée en ce que**
la caméra (33) et la source de lumière (35) peuvent être commandées par une unité de contrôle en fonction d'au moins un paramètre de véhicule, d'au moins une entrée d'un conducteur et/ou de signaux d'au moins une unité de capteur.

4. Unité d'éclairage et d'enregistrement d'images selon la revendication 2 ou 3, **caractérisée en ce que**
la deuxième, troisième et/ou quatrième unité d'entraînement peuvent être commandées par l'unité de contrôle en fonction d'au moins un paramètre de véhicule, d'au moins une entrée d'un conducteur et/ou de signaux d'au moins une unité de capteur.

5. Unité d'éclairage et d'enregistrement d'images selon l'une quelconque des revendications 2 à 4, **caractérisée en ce que**
la deuxième, troisième et/ou quatrième unité d'entraînement sont au moins partiellement disposées dans la section d'enregistrement d'images (32), la section d'éclairage (34) et/ou la section de terminaison (36).

6. Unité d'éclairage et d'enregistrement d'images selon l'une quelconque des revendications précédentes, **caractérisée en ce que**
l'unité de capteur est au moins partiellement disposée dans la section d'enregistrement d'images (32), la section d'éclairage (34) et/ou la section de terminaison (36).

7. Unité d'éclairage et d'enregistrement d'images selon l'une quelconque des revendications précédentes, **caractérisée en ce que**
une pluralité de sources de lumière (35) sont prévues, et/ou
une pluralité de conducteurs de lumière sont prévus avec l'au moins une source de lumière.

8. Unité d'éclairage et d'enregistrement d'images selon l'une quelconque des revendications précédentes, **caractérisée en ce que**
la section de terminaison (36) est amovible ou remplaçable et/ou installée sur la section d'éclairage (34) en tant que partie de terminaison (36).

9. Unité d'éclairage et d'enregistrement d'images selon l'une quelconque des revendications précédentes, **caractérisée en ce que**
la direction de rotation (126) de la position de repos et de rangement à la position de fonctionnement est dans le sens horaire ou dans le sens antihoraire.

10. Véhicule automobile muni d'au moins une unité d'éclairage et d'enregistrement d'images (30, 110) selon l'une quelconque des revendications précédentes.

11. Véhicule automobile selon la revendication 10, **caractérisé en ce que** la première, deuxième, troisième et/ou quatrième unité d'entraînement sont au moins partiellement disposées dans le véhicule automobile.

12. Véhicule automobile selon la revendication 10 ou 11, **caractérisé en ce que** l'unité de contrôle et/ou l'unité de capteur sont au moins partiellement disposées dans le véhicule automobile.

13. Véhicule automobile selon l'une quelconque des revendications 10 à 13, **caractérisé en ce que** le logement (20) dans le corps de véhicule (10) comprend une première zone de logement (21) complémentaire de la section d'enregistrement d'images (32) et une deuxième zone de logement (22) complémentaire de la section d'éclairage (34).

14. Véhicule automobile selon l'une quelconque des revendications 10 à 13, **caractérisé en ce que** la section mobile (31) s'étend à travers une ouverture (23) qui traverse la paroi du corps de véhicule.

15. Véhicule automobile selon l'une quelconque des revendications 10 à 14, **caractérisé en ce que** la section de terminaison (36) se termine en affleurement avec le corps de véhicule (10) dans la position de repos et de rangement de la section mobile (31).
